# FASCICULE DE BREVET EUROPEEN

(11) **EP 0 576 945 B1**
(45) Date de publication et mention de la délivrance du brevet: **04.09.1996**
(21) Numéro de dépôt: 93109847.9
(22) Date de dépôt: 21.06.1993
(51) Int. Cl.: B60L 11/12

(54) **Système de propulsion pour un véhicule**
Antriebssystem für ein Fahrzeug
Drive system for a vehicle

(30) Priorité: 01.07.1992 CH 2073/92; 05.08.1992 FR 9209812
(43) Date de publication de la demande: 05.01.1994
(73) Titulaire: SMH Management Services AG, CH-2501 Biel (CH)
(72) Inventeur: Jeanneret, René, CH-3274 Merzligen (CH)
(74) Mandataire: Patry, Didier Marcel Pierre

(56) Documents cités:
- WO-A-86/06009
- WO-A-92/08278
- DE-A- 4 116 899
- US-A- 4 306 156

## Description

La présente invention a pour objet un système de propulsion pour un véhicule ayant au moins une roue motrice et des moyens pour produire un signal de commande de la vitesse de rotation de ladite roue motrice, comportant :
- un moteur électrique couplé mécaniquement à ladite roue motrice;
- un accumulateur d'énergie électrique rechargeable;
- un moteur à combustible;
- un générateur d'énergie électrique couplé mécaniquement audit moteur à combustible;
- des moyens de transfert d'énergie électrique couplés électriquement audit moteur électrique, audit générateur et audit accumulateur pour faire passer un premier flux d'énergie électrique entre ledit accumulateur et ledit moteur électrique, un deuxième flux d'énergie électrique entre ledit générateur et ledit moteur électrique, et un troisième flux d'énergie électrique entre ledit générateur et ledit accumulateur; et
- des moyens pour produire un premier signal de mesure représentatif de la quantité d'énergie électrique contenue dans ledit accumulateur.

Le brevet US-A-4 306 156, par exemple, décrit un tel système, dans lequel les roues motrices du véhicule sont reliées à un moteur électrique alternatif de traction par l'intermédiaire d'un dispositif de réglage de la vitesse du véhicule comportant un convertisseur de couple hydraulique et une boîte de vitesses automatique commandée, notamment, par la pédale d'accélérateur du véhicule.

La tension alternative d'alimentation du moteur électrique de traction est fournie par un circuit convertisseur qui reçoit une tension continue d'un accumulateur rechargeable tant que la quantité d'énergie disponible dans ce dernier est supérieure à un seuil déterminé.

Lorsque cette quantité d'énergie disponible dans l'accumulateur devient inférieure à ce seuil, un circuit de commande comprenant notamment un ordinateur provoque la mise en marche d'un moteur à explosion couplé mécaniquement à un générateur de tension continue et la connexion de ce générateur au convertisseur et à l'accumulateur. Ce moteur à explosion fournit alors, par l'intermédiaire du générateur, l'énergie nécessaire à la traction du véhicule et à la recharge de l'accumulateur.

Lorsque la quantité d'énergie électrique disponible dans l'accumulateur dépasse à nouveau le seuil prédéterminé, le circuit de commande provoque l'arrêt du moteur à explosion et la déconnexion du générateur. L'énergie nécessaire à la traction du véhicule est alors à nouveau fournie par l'accumulateur.

Dans ce système, la tension et le courant fournis par le générateur lorsque le moteur à explosion fonctionne sont sensiblement constants. Une première partie de ce courant sert à alimenter le moteur de traction, par l'intermédiaire du circuit convertisseur, et la deuxième partie de ce courant sert à recharger l'accumulateur. Si le moteur de traction consomme peu ou pas d'énergie, par exemple lorsque le véhicule roule sur une pente descendante ou lorsqu'il est à l'arrêt, cette deuxième partie du courant fourni par le générateur peut être assez élevée. Mais on sait qu'un accumulateur ne doit pas être chargé par un courant supérieur à une valeur déterminée sous peine d'être endommagé. Le système décrit ci-dessus comporte donc une résistance branchée en série entre le générateur et l'accumulateur et qui est destinée à limiter le courant de charge de ce dernier.

Cette résistance dissipe une énergie importante, ce qui diminue notablement le rendement du système. En outre, cette résistance doit avoir des dimensions importantes et sa température peut atteindre des valeurs élevées, ce qui complique son montage dans le véhicule. De plus, malgré la présence de cette résistance, les conditions de charge de l'accumulateur ne sont pas favorables à cause des variations importantes du courant utilisé pour cette charge, ce qui peut entraîner une diminution de la durée de vie de cet accumulateur.

Un but de la présente invention est de proposer un système de propulsion d'un véhicule du même genre que celui qui est décrit par le brevet US-A-4 306 156 mais qui ne présente pas les inconvénients, décrits ci-dessus, de ce dernier, c'est-à-dire un système dont le rendement est nettement meilleur que celui de ce système connu, qui ne comporte pas de composant encombrant et pouvant avoir une température très élevée tel que la résistance de limitation mentionnée ci-dessus, et dans lequel les conditions de charge de l'accumulateur peuvent être proches des conditions optimales.

Ce but est atteint par le système revendiqué, qui est un système de propulsion pour un véhicule ayant au moins une roue motrice et des moyens pour produire un signal de commande de la vitesse de rotation de ladite roue motrice et qui comporte :
- un moteur électrique couplé mécaniquement à ladite roue motrice;
- un accumulateur d'énergie électrique rechargeable;
- un moteur à combustible;
- un générateur d'énergie électrique couplé mécaniquement audit moteur à combustible;
- des moyens de transfert d'énergie électrique couplés électriquement audit moteur électrique, audit générateur et audit accumulateur pour faire passer un premier flux d'énergie électrique entre ledit accumulateur et ledit moteur électrique, un deuxième flux d'énergie électrique entre ledit générateur et ledit moteur électrique, et un troisième flux d'énergie électrique entre ledit générateur et ledit accumulateur; et
- des moyens pour produire un premier signal de mesure représentatif de la quantité d'énergie électrique contenue dans ledit accumulateur;
   ce système étant caractérisé par le fait que lesdits moyens de transfert d'énergie électrique comportent :
- des premiers moyens de réglage pour régler l'intensité dudit premier et dudit deuxième flux d'énergie électrique en réponse à un premier signal de réglage; et
- des deuxièmes moyens de réglage pour régler l'intensité dudit deuxième et dudit troisième flux d'énergie électrique en réponse à un deuxième signal de réglage;
   et par le fait que ledit système comporte en outre :
- des moyens pour produire un deuxième signal de mesure représentatif de la puissance électrique transmise par ledit premier et ledit deuxième flux d'énergie électrique;
- des moyens pour produire un troisième signal de mesure représentatif de la puissance électrique transmise par ledit deuxième et ledit troisième flux d'énergie électrique; et
- un circuit de commande agencé de manière à produire ledit premier signal de réglage en fonction dudit signal de commande et à produire ledit deuxième signal de réglage en fonction de la différence entre ledit troisième et ledit deuxième signal de mesure.

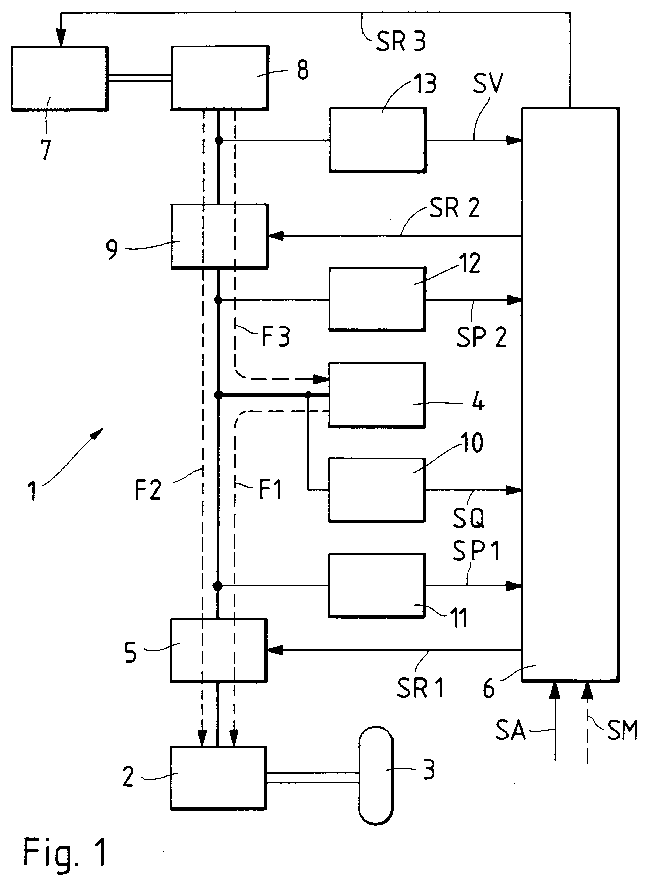

D'autres buts et avantages de la présente invention seront rendus évidents par la description qui va être faite ci-dessous à l'aide du dessin annexé dans lequel la figure 1, unique, est un schéma-bloc représentant deux formes d'exécution du système de propulsion selon la présente invention qui ne seront décrites qu'à titre d'exemples non limitatifs.

Le système de propulsion d'un véhicule schématisé à la figure 1, dans laquelle il est désigné par la référence 1, comporte un moteur asynchrone 2 dont le rotor, non représenté séparément, est relié mécaniquement à une roue motrice du véhicule, également représentée dans cette figure 1 avec la référence 3. Dans cette figure 1, le moteur 2 et la roue 3 sont séparés, leur liaison mécanique étant symbolisée par un double trait. Mais il est évident que ce moteur 2 et cette roue 3 peuvent être accolés l'un à l'autre, ou qu'ils peuvent être reliés par l'intermédiaire d'un arbre de transmission et/ou d'un train d'engrenages.

Le système 1 comporte également un accumulateur d'énergie électrique rechargeable 4, qui est relié au stator du moteur 2, non représenté séparément, par l'intermédiaire d'un circuit convertisseur 5. Ce convertisseur 5 est agencé de manière à fournir l'énergie électrique nécessaire au fonctionnement du moteur 2 sous la forme d'une tension et d'un courant alternatifs à partir de l'énergie électrique qu'il reçoit de l'accumulateur 4, ou d'autres circuits qui seront décrits plus loin, sous la forme d'une tension et d'un courant continus.

Le circuit convertisseur 5 est en outre agencé de manière à régler la tension et/ou le courant qu'il fournit au moteur 2, ainsi que, le cas échéant, la fréquence de cette tension et de ce courant, en réponse à un signal de réglage, désigné par SR1, qu'il reçoit d'un circuit de commande 6 dont les fonctions seront décrites plus loin. En d'autres termes, le convertisseur 5 est agencé de manière à régler la puissance électrique qu'il fournit au moteur 2 en réponse au signal de réglage SR1.

Il faut noter ici que les liaisons électriques entre les divers éléments, qui viennent d'être décrites ou qui seront décrites plus loin, sont symbolisées dans la figure 1 par une seule ligne même si ces liaisons sont constituées de plusieurs fils conducteurs comme cela est bien entendu le cas notamment pour les liaisons entre l'accumulateur 4, le convertisseur 5 et le moteur 2. Pour simplifier la compréhension de cette figure 1, les liaisons servant au transfert d'énergie électrique ont été symbolisées par des lignes plus épaisses que celles qui servent à la transmission de signaux de commande ou de mesure.

Le système 1 comporte encore un moteur à explosion 7 couplé mécaniquement au rotor, non représenté séparément, d'un générateur de tension alternative 8. Dans la figure 1, le moteur 7 et le générateur 8 sont séparés, leur liaison mécanique étant symbolisée par un double trait. Mais il est évident que ce moteur 7 et ce générateur 8 peuvent être accolés l'un à l'autre, ou qu'ils peuvent être reliés par l'intermédiaire d'un train d'engrenages.

Le stator du générateur 8, non représenté séparément, est relié à l'accumulateur 4, et donc au convertisseur 5, par l'intermédiaire d'un deuxième circuit convertisseur 9. Ce convertisseur 9 est agencé de manière à fournir, à partir de la tension alternative produite par le générateur 8, une tension continue sensiblement égale à la tension produite par l'accumulateur 4. Ce convertisseur 9 est en outre agencé de manière à régler, en réponse à un deuxième signal de réglage désigné par SR2, le courant et donc la puissance qu'il fournit à l'accumulateur 4 et au convertisseur 5. Le signal SR2 est produit par le circuit de commande 6 d'une manière qui sera décrite plus loin.

Le système 1 comporte encore un circuit de surveillance 10 dont les entrées sont reliées à l'accumulateur 4 et qui est agencé de manière à fournir au circuit de commande 6 un signal désigné par SQ, proportionnel à la quantité d'énergie électrique disponible dans cet accumulateur 4. Ce circuit de surveillance 10 ne sera pas décrit en détail car il peut être réalisé de diverses manières qui sont bien connues de l'homme du métier. On mentionnera simplement que ce circuit de surveillance 10 comporte généralement des circuits de mesure fournissant des signaux représentatifs de la tension aux bornes de l'accumulateur 4, du courant de charge ou de décharge de ce dernier ainsi que de sa température. Ce circuit 10 comporte également les circuits de calcul nécessaires à l'élaboration du signal SQ en réponse aux divers signaux de mesure mentionnés ci-dessus, en tenant compte éventuellement de l'âge de l'accumulateur 4, c'est-à-dire du temps qui s'est écoulé depuis sa première mise en service.

On admettra dans le présent exemple que le circuit 10 est agencé de manière que le signal SQ varie entre une valeur maximale lorsque l'accumulateur 4 est complètement chargé et une valeur nulle lorsque cet accumulateur 4 est complètement déchargé.

Le système 1 comporte encore un circuit de mesure 11 relié au convertisseur 5 et agencé de manière à produire et à fournir au circuit de commande 6 un signal de mesure SP1 proportionnel à la puissance électrique absorbée par ce convertisseur 5 et donc par le moteur 2, ainsi qu'un circuit de mesure 12 relié au convertisseur 9 et agencé de manière à produire et à fournir au circuit de commande 6 un signal de mesure SP2 proportionnel à la puissance électrique fournie par le convertisseur 9, et donc par le générateur 8.

Le système 1 peut encore comporter un circuit destiné à charger l'accumulateur 4 lorsque le véhicule est à l'arrêt à proximité d'une source d'énergie électrique telle qu'une prise reliée à un réseau de distribution d'énergie électrique public. Un tel circuit de charge n'a pas été représenté car il n'a pas de rapport direct avec la présente invention.

Le circuit de commande 6 ne sera pas décrit en détail car l'homme du métier n'aura aucune peine à le réaliser de l'une ou de l'autre des nombreuses manières possibles après avoir lu les explications du fonctionnement du système 1 qui vont suivre.

On mentionnera simplement que, en plus des signaux SQ, SP1 et SP2 déjà mentionnés, le circuit 6 reçoit un signal de commande SA représentatif de la position de la pédale d'accélérateur du véhicule. Ce signal SA peut être fourni, par exemple, par un potentiomètre dont le curseur est relié mécaniquement à cette pédale d'accélérateur. Cette pédale et ce potentiomètre n'ont pas été représentés.

On mentionnera également que le dispositif d'alimentation en carburant du moteur à explosion 7, qui comporte par exemple un carburateur ou une pompe à injection, est agencé de manière à régler cette alimentation en réponse à un signal de réglage SR3 fourni par le circuit de commande 6 dans des conditions qui seront décrites plus loin.

On admettra que, au moment où commence cette description du fonctionnement du système de propulsion 1, la quantité d'énergie électrique disponible dans l'accumulateur 4 est supérieure à une quantité Q1 déterminée, et que la valeur du signal SQ est donc supérieure à une valeur SQ1 correspondant à cette quantité d'énergie Q1.

Le fait que la valeur du signal SQ soit supérieure à cette valeur SQ1 a pour effet que le circuit de commande 6 produit le signal de réglage SR3 avec une valeur telle que l'alimentation du moteur à explosion 7 est complètement interrompue. Ce moteur 7 est donc arrêté.

En outre, le circuit de commande 6 produit le signal de réglage SR2 avec une valeur telle que le convertisseur 9 est bloqué, c'est-à-dire qu'il ne fonctionne pas et que sa sortie présente une impédance très élevée.

Lorsque le véhicule équipé du système de propulsion 1 se déplace dans ces conditions, le circuit de commande 6 produit le signal SR1 avec une valeur qui dépend de celle du signal SA, c'est-à-dire de la position de la pédale d'accélérateur.

En réponse à ce signal SR1, le convertisseur 5 fournit une certaine énergie électrique au moteur 2 sous la forme d'une tension et d'un courant alternatifs, et la puissance absorbée par ce moteur 2 sous forme électrique et celle qui est restituée par ce dernier sous forme mécanique dépendent de la valeur de ce signal SR1 et donc de la position de la pédale d'accélérateur du véhicule.

L'énergie électrique fournie par le convertisseur 5 au moteur 2 provient bien entendu de l'accumulateur 4, qui fournit cette énergie sous la forme d'une tension et d'un courant continus.

On peut donc considérer qu'un premier flux d'énergie électrique circule, dans ce cas, de l'accumulateur 4 au moteur 2 à travers le convertisseur 5, ce dernier réglant l'intensité de ce premier flux d'énergie en fonction de la valeur du signal de réglage SR1 qui dépend elle-même de la valeur du signal SA et donc de la position de la pédale d'accélérateur du véhicule. Ce premier flux d'énergie électrique est symbolisé dans la figure 1 par la flèche F1 dessinée en traits interrompus entre l'accumulateur 4 et le moteur 2 et sera désigné par la même référence dans la suite de cette description.

La quantité d'énergie électrique disponible dans l'accumulateur 4 diminue évidemment au fur et à mesure que le véhicule équipé du système de propulsion 1 se déplace. Le signal SQ, qui est représentatif de cette quantité d'énergie diminue donc également.

Lorsque ce signal SQ atteint la valeur SQ1 mentionnée ci-dessus, c'est-à-dire lorsque la quantité d'énergie disponible dans l'accumulateur 4 n'a plus que la valeur Q1, le circuit de commande 6 provoque le démarrage du moteur à explosion 7 et la mise en fonction du convertisseur 9.

Le démarrage du moteur 7 peut bien entendu être assuré par un démarreur classique alimenté par un accumulateur auxiliaire et commandé par un signal adéquat fourni par le circuit de commande 6, mais la présence de cet accumulateur auxiliaire et de ce démarreur rend peu avantageuse cette solution, qui n'a pas été représentée.

Il est donc préférable d'agencer le convertisseur 9 de manière qu'il puisse non seulement produire une tension continue à partir d'une tension alternative fournie par le générateur 8, comme cela a été mentionné ci-dessus, mais qu'il puisse également fonctionner en sens inverse, c'est-à-dire fournir au générateur 8 une tension alternative à partir de la tension continue produite par l'accumulateur 4.

Un tel convertisseur réversible est bien connu des spécialistes et ne sera donc pas décrit ici. On admettra simplement que, dans le présent exemple, le sens de fonctionnement du convertisseur 9 est déterminé par la polarité du signal de commande SR2.

On voit que lorsque le convertisseur 9 est agencé de la manière décrite ci-dessus, il suffit que le générateur 8 soit de l'un quelconque des divers types bien connus de générateurs capables de fonctionner également comme moteur pour que le démarrage du moteur à explosion 7 puisse être assuré sans qu'il soit nécessaire d'utiliser un démarreur et un accumulateur auxiliaire.

C'est une telle solution qui a été adoptée dans le système 1 de la figure 1.

Lorsque le signal SQ atteint la valeur SQ1, comme cela a été décrit ci-dessus, le circuit de commande 6 donne donc au signal SR2 une polarité et une valeur telles que le convertisseur 9 fonctionne dans le sens où il fournit une tension alternative au générateur 8 à partir de la tension continue produite par l'accumulateur 4.

Le générateur 8 fonctionne donc en moteur et provoque la rotation du moteur à explosion 7.

Simultanément, le circuit de commande 6 donne au signal SR3 une valeur telle que le dispositif d'alimentation en carburant du moteur 7 peut fonctionner.

Ce moteur 7 démarre donc et commence à faire tourner le générateur 8, et ce dernier commence à produire une tension alternative.

Le circuit de commande 6 change alors la polarité du signal SR2, de sorte que le convertisseur 9 commence à fournir une tension continue en réponse à la tension alternative qu'il reçoit du générateur 8.

Comme cela a déjà été mentionné, la tension continue produite par le convertisseur 9 est sensiblement égale à la tension aux bornes de l'accumulateur 4.

En outre comme cela sera décrit en détail plus loin, l'énergie électrique produite par le convertisseur 9, qui provient de celle qui est produite par le générateur 8, est utilisée, d'une part, par le convertisseur 5 pour fournir au moteur 2 l'énergie nécessaire à son fonctionnement et, d'autre part, pour recharger l'accumulateur 4.

On peut donc considérer que, dans ce cas, un deuxième flux d'énergie électrique circule du générateur 8 au moteur 2 à travers les convertisseurs 9 et 5 et un troisième flux d'énergie électrique circule de ce générateur 8 à l'accumulateur 4 à travers le convertisseur 9.

Ces deux flux d'énergie électrique sont respectivement symbolisés dans la figure 1 par les flèches en traits interrompus F2 et F3 et seront désignés par ces mêmes références dans la suite de cette description.

Il est évident que dans ce cas la puissance transmise au moteur 2 par le flux d'énergie F2 est déterminée par la valeur du signal SR1, exactement comme dans le cas décrit ci-dessus où le moteur 7 ne fonctionne pas et où toute l'énergie nécessaire à la propulsion du véhicule est fournie par l'accumulateur 4.

Il est généralement recommandé de recharger un accumulateur avec un courant au moins sensiblement égal à un courant constant déterminé en fonction du genre de cet accumulateur, de sa capacité maximale et du temps admissible pour le recharger, ceci afin que sa durée de vie soit aussi grande que possible.

Pour recharger l'accumulateur 4 avec ce courant sensiblement constant et prédéterminé, il faut donc que la puissance transmise à cet accumulateur 4 par le flux d'énergie F3 soit également sensiblement constante et prédéterminée.

Cette dernière puissance est égale à la différence entre la puissance fournie par le convertisseur 9 et celle qui est absorbée par le convertisseur 5, et elle est donc proportionnelle à la différence entre le signal SP2 et le signal SP1, à condition bien entendu que les facteurs de proportionnalité entre ces signaux et les puissances correspondantes soient égaux, ce qui n'est pas difficile à réaliser.

La puissance absorbée par le convertisseur 5 est évidemment variable, et il en est donc de même pour la valeur du signal SP1.

Pour que la différence entre les signaux SP2 et SP1 reste constante, il faut donc faire varier la puissance fournie par le convertisseur 9, à laquelle le signal SP2 est proportionnel, et donc faire varier la puissance fournie par le générateur 8.

Cette dernière dépend directement de la vitesse de rotation de ce générateur 8, et donc de celle du moteur à explosion 7 qui, à son tour, dépend de la puissance mécanique que ce moteur 7 doit fournir et de la valeur du signal SR3 qui commande son dispositif d'alimentation en carburant.

Pour que la puissance fournie à l'accumulateur 4 soit sensiblement constante, le circuit de commande 6 peut donc être agencé de manière qu'il règle la puissance fournie par le générateur 8 en réglant la vitesse de rotation du moteur 7 à l'aide du signal SR3, la valeur de ce signal SR3 étant déterminée en fonction de la différence entre les signaux SP2 et SP1.

Pour que la puissance fournie à l'accumulateur 4 soit sensiblement constante, le circuit de commande 6 peut également être agencé de manière qu'il règle la puissance mécanique que le moteur 7 doit fournir.

Pour une raison qui sera rendue évidente par la suite de cette description, le système 1 doit comporter dans ce cas, en plus des éléments décrits ci-dessus, un dispositif produisant un signal proportionnel à la vitesse de rotation du moteur 7 et/ou du générateur 8.

La tension produite par le générateur 8 étant proportionnelle à sa vitesse de rotation, un tel dispositif peut être simplement constitué par un circuit de mesure de cette tension dont l'entrée est reliée au générateur 8 et dont la sortie produit un signal proportionnel à cette tension et donc à la vitesse de rotation du générateur 8. Ce circuit a été représenté à la figure 1 avec la référence 13 et le signal qu'il produit sera appelé signal SV.

Toujours dans ce cas, le circuit de commande 6 est agencé de manière à calculer en permanence, à partir de la valeur du signal SP1 et en tenant compte des caractéristiques du moteur 7 et du générateur 8, une valeur de consigne pour le signal SV, cette valeur de consigne étant égale à celle de ce signal SV lorsque la vitesse de rotation du générateur 8 est telle que la puissance qu'il fournit est justement égale à la somme de la puissance absorbée par le convertisseur 5 et de celle qui doit être utilisée pour recharger l'accumulateur 4.

Lorsque le véhicule équipé du système 1 roule à vitesse constante sur un sol parfaitement horizontal, la puissance consommée par le moteur 2 et donc celle qui est absorbée par le convertisseur 5 sont constantes, de même par conséquent que la valeur du signal SP1.

Admettons que le moteur 7, et donc le générateur 8, tournent alors à une vitesse telle que la puissance produite par ce dernier est exactement égale à la somme de cette puissance absorbée par le convertisseur 5 et de celle que l'on désire fournir à l'accumulateur 4 pour le recharger. Le signal SV a donc exactement la valeur de consigne calculée par le circuit de commande 6, et le système est dans un état stable.

Si maintenant la puissance absorbée par le convertisseur 5 augmente, par exemple parce que le conducteur du véhicule désire accélérer celui-ci, le signal SP1 augmente également.

Le circuit de commande 6 calcule alors, à partir de cette nouvelle valeur du signal SP1, une nouvelle valeur de consigne pour le signal SV, plus élevée que la valeur de consigne précédente. La différence entre cette nouvelle valeur de consigne et la valeur du signal SV devient donc positive puisque, au premier instant tout au moins, la vitesse de rotation du générateur 8 ne change pas.

En réponse à cette différence entre la nouvelle valeur de consigne et celle du signal SV, le circuit de commande 6 donne au signal SR2 une nouvelle valeur telle que la puissance fournie par le convertisseur 9 et donc celle que doit produire le générateur 8, diminue.

La puissance fournie par le convertisseur 9 ayant diminué alors que celle qui est absorbée par le convertisseur 5 a augmenté, la différence entre ces deux puissances diminue ou devient même négative.

Dans le premier cas, la charge de l'accumulateur 4 n'est pas interrompue mais simplement ralentie. Dans le deuxième cas, cette charge est interrompue, et l'accumulateur 4 fournit au convertisseur 5 la part de la puissance qui est absorbée par ce dernier et que le convertisseur 9 ne lui fournit plus.

La diminution de la puissance produite par le générateur 8 a pour effet que le couple résistant opposé par ce dernier au moteur 7 diminue également. Il en résulte que la vitesse de rotation de ce moteur 7 augmente, de même bien entendu que celle du générateur 8.

Le signal SV augmente donc également et, lorsqu'il devient supérieur à la nouvelle valeur de consigne mentionnée ci-dessus, le circuit de commande 6 modifie à nouveau le signal SR2 et lui donne une valeur telle que le convertisseur 9 fournit à nouveau toute la puissance absorbée par le convertisseur 5 et la puissance nécessaire à la charge de l'accumulateur 4.

La puissance que doit fournir le générateur 8 augmente donc, de même que le couple résistant qu'il oppose au moteur 7. La vitesse de rotation de ce moteur 7, et donc du générateur 8, diminue à nouveau, de même bien entendu que la valeur du signal SV. Mais dès que cette valeur du signal SV devient inférieure à sa nouvelle valeur de consigne, le circuit de commande 6 modifie la valeur du signal SR2 de manière que la puissance fournie par le convertisseur 9 diminue, ce qui a comme conséquence que la vitesse de rotation du générateur 8 augmente à nouveau, et ainsi de suite.

De manière analogue, la valeur de consigne pour le signal SV calculée par le circuit de commande 6 diminue lorsque la puissance absorbée par le convertisseur 9 diminue. La différence entre cette nouvelle valeur de consigne et le signal SV devient donc négative, et en réponse à cette différence négative, le circuit de commande 6 donne au signal SR2 une valeur telle que la puissance fournie par le convertisseur 9 augmente.

Cette augmentation a comme conséquence, d'une part, que la puissance fournie à l'accumulateur 4 augmente et, d'autre part, que la vitesse de rotation du générateur 8 diminue jusqu'à ce que le signal SV devienne inférieur à sa nouvelle valeur de consigne.

Le circuit de commande 6 modifie alors à nouveau le signal SR2, de manière que la puissance fournie par le convertisseur 9 diminue et devient à nouveau égale à la somme de la puissance absorbée par le convertisseur 5 et de celle qui est nécessaire à la charge de l'accumulateur 4.

La vitesse de rotation du générateur 8 augmente alors à nouveau, et ainsi de suite.

On voit que tant que la puissance absorbée par le convertisseur 5 est constante, la vitesse de rotation du générateur 8 oscille autour d'une valeur moyenne qui est celle pour laquelle le signal SV est égal à la valeur de consigne calculée par le circuit de commande 6, c'est-à-dire pour laquelle la puissance fournie par le convertisseur 9 est égale à la somme de la puissance absorbée par le convertisseur 5 et de celle qui est nécessaire pour recharger l'accumulateur 4. L'amplitude et la fréquence de ces oscillations de la vitesse de rotation du générateur 8 peuvent être maintenues à des valeurs faibles par un choix judicieux des caractéristiques des divers éléments concernés. En outre, lorsque la puissance absorbée par le convertisseur 5 varie, la vitesse de rotation du générateur 8 est réglée en conséquence et, pendant le temps nécessaire à ce réglage, l'accumulateur 4 fournit, le cas échéant, la puissance que le convertisseur 5 absorbe et que le générateur 8 ne fournit plus, ou absorbe celle que ce générateur 8 fournit et que le convertisseur 5 n'absorbe plus.

On voit que lorsque le circuit de commande 6 est agencé de manière à mettre en oeuvre la méthode qui vient d'être décrite, la vitesse de rotation du générateur 8 est réglée à la valeur voulue sans qu'il soit nécessaire de modifier la valeur du signal SR3 qui commande le dispositif d'alimentation en carburant du moteur 7.

Ce signal SR3 peut donc avoir une valeur constante choisie de manière que ce moteur 7 fonctionne dans les conditions les plus favorables, c'est-à-dire qu'il consomme le moins possible de carburant et/ou qu'il produise aussi peu que possible de gaz polluants.

Ainsi, par exemple, dans le cas où le dispositif d'alimentation en carburant du moteur 7 comporte un carburateur ayant un papillon de réglage dont la position est commandée par le signal SR3, il est possible, et même préférable, de donner à ce signal SR3 une valeur constante telle que ce papillon est en permanence complètement ouvert.

Lorsque le système 1 fonctionne comme cela vient d'être décrit, la quantité d'énergie électrique disponible dans l'accumulateur 4 augmente et, après un certain temps, atteint une valeur Q2 prédéterminée, le signal SQ prenant alors une valeur SQ2.

En réponse à cette valeur SQ2 de ce signal SQ, le circuit de commande 6 provoque l'arrêt du moteur 7 en donnant par exemple au signal SR3 une valeur telle que l'alimentation en carburant de ce moteur 7 est complètement interrompue. Simultanément, le circuit de commande 6 provoque le blocage du convertisseur 9 en donnant au signal SR2 une valeur telle que ce convertisseur 9 ne fonctionne plus et que sa sortie présente une impédance très élevée.

Depuis ce moment, toute l'énergie nécessaire à la propulsion du véhicule est à nouveau fournie par l'accumulateur 4. La quantité d'énergie électrique disponible dans ce dernier diminue alors, jusqu'à ce qu'elle atteigne la valeur Q1. Le circuit de commande 6 provoque alors à nouveau la mise en marche du moteur 7 et le déblocage du convertisseur 9, et le système 1 recommence à fonctionner comme cela a été décrit ci-dessus.

Comme cela ressort clairement de la description qui précède, les intensités des divers flux d'énergie électrique qui ont été définis ci-dessus et qui circulent entre les éléments du système 1 produisant ou absorbant une telle énergie, c'est-à-dire l'accumulateur 4, le moteur 2 et le générateur 8, sont réglées par les convertisseurs 5 et 9 qui constituent donc, ensemble, des moyens de transfert de cette énergie entre ces éléments. Le convertisseur 5 règle l'intensité du premier et du deuxième de ces flux en fonction du signal SR1 qui dépend lui-même du signal SA et donc de la position de la pédale d'accélérateur du véhicule. Ce convertisseur 5 constitue donc un moyen de réglage de la vitesse du véhicule. Le convertisseur 9 règle l'intensité de la somme du deuxième et du troisième de ces flux en fonction du signal SR2 et constitue donc un moyen de réglage de la charge de l'accumulateur 4.

En outre, le fait que le système de propulsion d'un véhicule selon la présente invention comporte un convertisseur tel que le convertisseur 9 qui est capable de régler la quantité d'énergie fournie par le générateur entraîné par le moteur à explosion (le générateur 8 et le moteur 7 dans l'exemple de la figure 1) donne à ce système de nombreux avantages par rapport aux systèmes connus tels que celui qui est décrit dans le brevet US-A-4 306 156 mentionné ci-dessus.

Parmi ces avantages, on mentionnera le fait que, quelle que soit la méthode choisie, l'accumulateur que comporte le système (l'accumulateur 4 dans l'exemple décrit) peut être rechargé dans de bonnes conditions, ce qui augmente sa durée de vie, et sans qu'il soit nécessaire de prévoir une résistance de limitation du courant utilisé pour cette recharge, ce qui augmente notablement le rendement du système et augmente donc l'autonomie du véhicule, c'est-à-dire la distance qu'il peut parcourir avant qu'il soit nécessaire de remplir son réservoir de carburant.

En outre, les conditions de fonctionnement du moteur à explosion (le moteur 7 dans l'exemple le décrit) peuvent être choisies de manière optimale, ce qui augmente encore le rendement du système et diminue la quantité de gaz polluants rejetés par ce moteur. De plus, le générateur couplé au moteur à explosion peut être du type de ceux qui produisent une tension alternative, qui sont moins encombrants, plus légers et moins chers, à performances égales, que ceux qui produisent une tension continue. En outre, la liaison entre le moteur à explosion et le générateur peut être agencée de manière que ce dernier tourne à vitesse élevée, ce qui permet de réduire ses dimensions et donc son prix.

Il est évident que les valeurs Q1 et Q2 entre lesquelles varie la quantité d'énergie électrique disponible dans l'accumulateur 4 peuvent être choisies très librement, en fonction notamment du type de l'accumulateur 4.

Ainsi, dans les cas où l'accumulateur 4 est un accumulateur au plomb, on choisira de préférence pour Q1 une valeur située entre 20% et 30% environ de la quantité maximale d'énergie électrique que l'accumulateur 4 peut contenir, afin d'éviter les dégâts que peut subir un tel accumulateur lorsqu'il est déchargé jusqu'à ce que la quantité d'énergie électrique encore disponible soit inférieure à cette valeur.

Toujours par exemple, on peut choisir pour Q2 une valeur proche de la quantité maximale d'énergie électrique que peut contenir l'accumulateur 4. Mais on sait que le rendement de charge d'un accumulateur diminue lorsque la quantité d'énergie contenue dans celui-ci s'approche de cette quantité maximale. Il est donc préférable de choisir pour Q2 une valeur inférieure à cette quantité maximale, par exemple une valeur de l'ordre de 70% à 80% de cette dernière, pour laquelle le rendement de charge est encore assez grand. Un tel choix augmente encore l'autonomie du véhicule.

Cette autonomie du véhicule peut être encore augmentée en agençant le système 1 de manière que lorsque son conducteur relâche complètement la pédale d'accélérateur, au moins une partie de l'énergie cinétique du véhicule soit convertie en énergie électrique, et qu'une partie au moins de cette dernière soit utilisée pour recharger l'accumulateur 4.

Un système 1 agencé de cette manière ne sera pas décrit en détail car sa réalisation ne pose pas de problème particulier à l'homme du métier.

On mentionnera simplement que, dans un tel système, le moteur 2 doit évidemment être de l'un des dives types bien connus de moteurs capables de fonctionner en générateurs. En outre, le convertisseur 5 doit être également capable de fonctionner dans le sens inverse de celui qui a été décrit ci-dessus, c'est-à-dire qu'il doit être capable de produire une tension et un courant continus à partir de la tension et du courant alternatifs fournis par le moteur 2 lorsque celui-ci fonctionne en générateur.

De plus, le circuit de commande 6 doit être agencé de manière à donner au signal SR1 une valeur et/ou une polarité telles que le convertisseur 5 fonctionne de la deuxième façon mentionnée ci-dessus lorsque le signal SA prend la valeur qui indique que le conducteur du véhicule a complètement relâché la pédale d'accélérateur de celui-ci.

Cependant, le circuit de commande 6 doit de plus être agencé de manière que, dans ce cas, la quantité d'énergie électrique contenue dans l'accumulateur 4 ne dépasse pas sa valeur maximale admissible, et que la puissance électrique fournie par le convertisseur 5 à cet accumulateur 4 ne soit jamais supérieure à celle que ce dernier peut absorber sans dommage.

Pour remplir ces conditions, le circuit de commande 6 peut être agencé de diverses manières.

Ainsi, par exemple, le circuit de commande 6 peut être agencé de manière à donner au signal SR1 une valeur telle que la puissance électrique fournie par le convertisseur 5, qui est indiquée par le signal SP1, soit au plus égale à celle que l'accumulateur 4 peut absorber dans le cas où le signal SQ indique que cet accumulateur 4 n'est pas complètement chargé, et une valeur telle que le convertisseur 5 est bloqué dans le cas contraire.

Toujours par exemple, le circuit de commande 6 peut aussi être agencé de manière que le signal SR1 ait toujours la valeur pour laquelle le convertisseur 5 transmet toute la puissance électrique fournie par le moteur 2 lorsque celui-ci fonctionne en générateur, quelle que soit cette puissance. Ce circuit de commande 6 est alors agencé en outre de manière que, si le signal SP1 et/ou le signal SQ indiquent que cette puissance est supérieure à celle que l'accumulateur 4 peut absorber, il donne au signal SR2 la polarité pour laquelle le convertisseur 9 fonctionne dans le sens où il fournit de la puissance électrique au générateur 8, et au signal SR3 la valeur pour laquelle l'alimentation en carburant du moteur 7 est interrompue. Ce moteur 7 est alors entraîné en rotation par le générateur 8, qui fonctionne en moteur, et dissipe sous forme de chaleur la puissance électrique absorbée par le convertisseur 9. Le circuit de commande 6 est bien entendu agencé dans ce cas de manière que la valeur du signal SR2 soit telle que cette puissance électrique absorbée par le convertisseur 9 soit égale à la différence entre celle qui est fournie par le convertisseur 5, qui est indiquée par le valeur du signal SP1, et celle que peut absorber l'accumulateur 4.

Cette conversion d'une partie au moins de l'énergie cinétique du véhicule en énergie électrique ayant pour effet de freiner ce dernier, un tel système 1 a encore pour avantage de diminuer l'usure du dispositif de freinage conventionnel du véhicule, dispositif qui doit de toutes façons être prévu ne serait-ce que pour des raisons de sécurité évidentes.

Dans une autre forme d'exécution du système de propulsion selon la présente invention, qui est également représentée à la figure 1, le circuit de commande 6 est agencé de manière que la valeur de Q1 et/ou la valeur de Q2 soient différentes selon la valeur d'un signal de sélection de mode SM fourni par un commutateur à deux positions disposé sur le tableau de bord du véhicule. La liaison entre ce commutateur, qui n'a pas été représenté, et le circuit de commande 6 est symbolisée dans la figure 1 par le trait interrompu également désigné par la référence SM.

Ainsi, lorsque le signal SM a une première valeur, ce qui correspond à la première position du commutateur, les valeurs de Q1 et Q2 peuvent être assez éloignées l'une de l'autre, par exemple être respectivement égales à 20% et 80% de la quantité maximale d'énergie que peut contenir l'accumulateur 4.

Dans ce premier mode de fonctionnement, le véhicule peut donc rouler sur une assez grande distance sans que le moteur à explosion ne soit mis en marche, ce qui permet par exemple de traverser une agglomération sans émettre de gaz polluants.

De même, lorsque le signal SM a une deuxième valeur, c'est-à-dire lorsque le commutateur est dans sa deuxième position, les valeurs de Q1 et Q2 peuvent être assez proches l'une de l'autre, par exemple être respectivement égales à 40% et 60% de la quantité maximale d'énergie que peut contenir l'accumulateur 4.

Dans ce deuxième mode de fonctionnement, le moteur à explosion est mis en marche à intervalles plus rapprochés que dans le premier mode de fonctionnement, mais le rendement du système est amélioré par le fait que le rendement de charge de l'accumulateur est plus élevé, et la durée de vie de ce dernier est prolongée. Ce deuxième mode de fonctionnement est avantageusement utilisé lorsque le véhicule roule en pleine campagne.

Dans une variante de cette deuxième forme d'exécution du système selon l'invention, le commutateur fournissant le signal SM peut prendre une ou plusieurs autres positions en plus de celles qui ont été mentionnées ci-dessus, ce signal SM ayant alors une valeur différente pour chacune des positions de ce commutateur. En outre, le circuit de commande 6 est agencé de manière que la valeur de Q1 et/ou la valeur de Q2 soient différentes pour chacune des valeurs du signal SM.

Ainsi, par exemple, les valeurs de Q1 et de Q2 peuvent être celles qui ont été mentionnées ci-dessus pour deux des valeurs du signal SM et, pour une troisième valeur de ce signal SM, être respectivement égales à 70% et 90% de la quantité maximale d'énergie que peut contenir l'accumulateur 4.

Ce troisième mode de fonctionnement peut être avantageusement utilisé lorsque le véhicule roule en pleine campagne et que son conducteur sait qu'il devra ensuite traverser une agglomération. En effet, lorsque le véhicule arrivera à l'entrée de l'agglomération, la quantité d'énergie disponible dans l'accumulateur 4 sera au moins égale à 70% de la quantité maximale d'énergie qu'il peut contenir. Cette quantité d'énergie disponible sera donc probablement suffisante pour que le véhicule puisse traverser cette agglomération en fonctionnant selon le premier mode décrit ci-dessus, sans que le moteur à explosion ne soit mis en marche.

Il est évident que d'autres modifications et/ou adjonctions peuvent être apportées au système de propulsion d'un véhicule décrit ci-dessus sans pour autant sortir du cadre de la présente invention tel que défini par les revendications.

Ainsi, notamment, le moteur à explosion 7 du système 1 de la figure 1 peut être remplacé par n'importe quel autre type de moteur à combustible, c'est-à-dire par n'importe quel autre moteur utilisant la combustion d'un combustible pour produire de l'énergie mécanique tel que, par exemple, une turbine à gaz.

De même, il est évident que le système selon la présente invention peut être utilisé dans un véhicule comportant plusieurs roues motrices. Dans un tel cas, chaque paire de roues motrices, voire même toutes celles-ci, peuvent être entraînées par un moteur unique tel que le moteur 2 de la figure 1, par l'intermédiaire de moyens de transmission mécaniques bien connus, ou chaque roue motrice peut être entraînée par un moteur particulier.

## Revendications

1. Système de propulsion (1) pour un véhicule ayant au moins une roue motrice (3) et des moyens pour produire un signal de commande (SA) de la vitesse de rotation de ladite roue motrice (3), comportant :
- un moteur électrique (2) couplé mécaniquement à ladite roue motrice (3);
- un accumulateur d'énergie électrique rechargeable (4);
- un moteur à combustible (7);
- un générateur d'énergie électrique (8) couplé mécaniquement audit moteur à combustible (7);
- des moyens de transfert d'énergie électrique (5, 9) couplés électriquement audit moteur électrique (2), audit générateur (8) et audit accumulateur (4) pour faire passer un premier flux d'énergie électrique (F1) entre ledit accumulateur (4) et ledit moteur électrique (2), un deuxième flux d'énergie électrique (F2) entre ledit générateur (8) et ledit moteur électrique (2), et un troisième flux d'énergie électrique (F3) entre ledit générateur (8) et ledit accumulateur (4); et
- des moyens (10) pour produire un premier signal de mesure (SQ) représentatif de la quantité d'énergie électrique contenue dans ledit accumulateur (4);
caractérisé par le fait que lesdits moyens de transfert d'énergie électrique (5, 9) comportent :
- des premiers moyens de réglage (5) pour régler l'intensité dudit premier (F1) et dudit deuxième flux d'énergie électrique (F2) en réponse à un premier signal de réglage (SR1); et
- des deuxièmes moyens de réglage (9) pour régler l'intensité dudit deuxième (F2) et dudit troisième flux d'énergie électrique (F3) en réponse à un deuxième signal de réglage (SR2);
et par le fait que ledit système (1) comporte en outre :
- des moyens (11) pour produire un deuxième signal de mesure (SP1) représentatif de la puissance électrique transmise par ledit premier (F1) et ledit deuxième flux d'énergie électrique (F2);
- des moyens (12) pour produire un troisième signal de mesure (SP2) représentatif de la puissance électrique transmise par ledit deuxième (F2) et ledit troisième flux d'énergie électrique (F3); et
- un circuit de commande (6) agencé de manière à produire ledit premier signal de réglage (SR1) en fonction dudit signal de commande (SA) et à produire ledit deuxième signal de réglage (SR2) en fonction de la différence entre ledit troisième (SP2) et ledit deuxième signal de mesure (SP1).

2. Système de propulsion selon la revendication 1, caractérisé par le fait que ledit circuit de commande (6) est agencé de manière à produire ledit deuxième signal de réglage (SR2) avec une valeur telle que ladite différence entre ledit troisième (SP2) et ledit deuxième signal de mesure (SP1) est au moins sensiblement égale à une valeur déterminée.

3. Système de propulsion selon la revendication 2, caractérisé par le fait qu'il comporte des moyens (13) pour produire un quatrième signal de mesure (SV) représentatif de la vitesse de rotation dudit générateur (8), et par le fait que ledit circuit de commande (6) est agencé de manière :
- à calculer une valeur de consigne pour ledit quatrième signal de mesure (SV) en fonction dudit deuxième signal de mesure (SP1);
- à donner tout d'abord audit deuxième signal de réglage (SR2) une valeur telle que ladite intensité du deuxième (F2) et du troisième flux d'énergie électrique (F3) diminue ou augmente selon que ladite différence entre ledit troisième (SP2) et ledit deuxième signal de mesure (SP1) diminue ou, respectivement augmente; et
- lorsque ledit quatrième signal de mesure (SV) atteint ladite valeur de consigne, à donner audit deuxième signal de réglage (SR2) une valeur telle que ladite différence entre ledit troisième (SP2) et ledit deuxième signal de mesure (SP1) est à nouveau égale à ladite valeur déterminée.

## Claims

1. Drive system for a vehicle (1) having at least one drive wheel (3) and means for producing a signal (SA) for controlling the speed of rotation of said drive wheel (3), having :
- an electric motor (2) mechanically coupled to said drive wheel (3);
- a rechargeable electric energy accumulator (4);
- an internal combustion engine (7);
- an electric energy generator (8) mechanically coupled to said internal combustion engine (7);
- electric energy transfer means (5, 9) electrically connected to said electric motor (2), to said generator (8) and to said accumulator (4) to cause a first electric energy flux (F1) to pass between said accumulator (4) and said electric motor (2), a second electric energy flux (F2) to pass between said generator (8) and said electric motor (2), and a third electric energy flux (F3) to pass between said generator (8) and said accumulator (4); and
- means (10) to produce a first measurement signal (SQ) representative of the amount of electric energy stored in said accumulator (4);
characterized in that said electric energy transfer means (5, 9) have :
- first regulating means (5) to regulate the intensity of said first (F1) and of said second electric energy flux (F2) in response to a first regulating signal (SR1); and
- second regulating means (9) to regulate the intensity of said second (F2) and of said third electric energy flux (F3) in response to a second regulating signal (SR2);
and in that said system (1) also has :
- means (11) to produce a second measurement signal (SP1) representative of the electric power transmitted by said first (F1) and said second electric energy flux (F2);
- means (12) to produce a third measurement signal (SP2) representative of the electric power transmitted by said second (F2) and said third electric energy flux (F3); and
- a control circuit (6) arranged so as to produce said first regulating signal (SR1) as a function of said control signal (SA) and to produce said second regulating signal (SR2) as a function of the difference between said third (SP2) and said second measurement signal (SP1).

2. Drive system according to claim 1, characterized in that said control circuit (6) is arranged so as to produce said second regulating signal (SR2) with a value such that said difference between said third (SP2) and said second measurement signal (SP1) is at least substantially equal to a determined value.

3. Drive system according to claim 2, characterized in that it has means (13) to produce a fourth measurement signal (SV) representative of the speed of rotation of said generator (8), and in that said control circuit (6) is arranged so as to:
- calculate a reference value for said fourth measurement signal (SV) as a function of said second measurement signal (SP1);
- firstly give said second regulating signal (SR2) a value such that said intensity of the second (F2) and of the third electric energy flux (F3) decreases or increases depending on whether said difference between said third (SP2) and said second measurement signal (SP1) decreases or, respectively, increases; and
- when said fourth measurement signal (SV) reaches said reference value, give said second regulating signal (SR2) a value such that said difference between said third (SP2) and said second measurement signal (SP1) is again equal to said determined value.

## Patentansprüche

1. Antriebssystem (1) für ein Fahrzeug mit mindestens einem angetriebenen Rad (3) und Mitteln zum Erzeugen eines Steuersignals (SA) für die Rotationsgeschwindigkeit des angetriebenen Rades (3), umfassend:
- einen Elektromotor (2), der mit dem angetriebenen Rad (3) mechanisch gekoppelt ist;
- einen wiederaufladbaren Akkumulator für elektrische Energie (4);
- einen Verbrennungsmotor (7);
- einen Generator für elektrische Energie (8), mechanisch mit dem Verbrennungsmotor (7) gekoppelt;
- Mittel zum Transfer elektrischer Energie (5, 9), die elektrisch mit dem Elektromotor (2), dem Generator (8) und dem Akkumulator (4) gekoppelt sind, um einen ersten elektrischen Energiefluß (F1) zwischen dem Akkumulator (4) und dem Elektromotor (2), einen zweiten elektrischen Energiefluß (F2) zwischen dem Generator (8) und dem Elektromotor (2) und einen dritten elektrischen Energiefluß (F3) zwischen dem Generator (8) und dem Akkumulator (4) fließen zu lassen; und
- Mittel (10) zum Erzeugen eines ersten Meßsignals (SQ), das repräsentativ für die im Akkumulator (4) enthaltene Energiemenge ist;
dadurch gekennzeichnet, daß die Mittel für den Transfer elektrischer Energie (5, 9) umfassen:
- erste Reguliermittel (5) zum Regulieren der Intensität des ersten (F1) und zweiten (F2) Flusses elektrischer Energie in Reaktion auf ein erstes Reguliersignal (SR1); und
- zweite Reguliermittel (9) zum Regulieren der Intensität des zweiten (F2) und des dritten (F3) elektrischen Energieflusses in Reaktion auf ein zweites Reguliersignal (SR2);
und daß das System (1) ferner umfaßt:
- Mittel (11) zum Erzeugen eines zweiten Meßsignals (SP1), das repräsentativ für die von dem ersten (F1) und dem zweiten (F2) elektrischen Energiefluß übertragene elektrische Leistung ist;
- Mittel (12) zum Erzeugen eines dritten Meßsignals (SP2), das repräsentativ für die von dem zweiten (F2) und dritten (F3) elektrischen Energiefluß übertragene elektrische Leistung ist; und
- eine Steuerschaltung (6), die derart ausgebildet ist, daß sie das erste Reguliersignal (SR1) in Abhängigkeit von dem Steuersignal (SA) erzeugt und das zweite Reguliersignal (SR2) in Abhängigkeit von der Differenz zwischen dem dritten (SP2) und dem zweiten (SP1) Meßsignal erzeugt.

2. Antriebssystem nach Anspruch 1, dadurch gekennzeichnet, daß die Steuerschaltung (6) derart ausgebildet ist, daß sie das zweite Reguliersignal (SR2) mit einem Wert derart erzeugt, daß die Differenz zwischen dem dritten (SP2) und dem zweiten Meßsignal (SP1) mindestens im wesentlichen gleich einem bestimmten Wert ist.

3. Antriebssystem nach Anspruch 2, dadurch gekennzeichnet, daß es Mittel (13) zum Erzeugen eines vierten Meßsignals (SV) umfaßt, das repräsentativ für die Rotationsgeschwindigkeit des Generators (8) ist, und daß die Steuerschaltung (6) ausgebildet ist:
- für das Berechnen eines Sollwertes für das vierte Meßsignal (SV) in Abhängigkeit von dem zweiten Meßsignal (SP1);
- um zunächst dem zweiten Reguliersignal (SR2) einen Wert derart zu verleihen, daß die Intensität des zweiten (F2) und dritten (F3) elektrischen Energieflusses abnimmt oder zunimmt, je nach dem, ob die Differenz zwischen dem dritten (SP2) und dem zweiten (SP1) Meßsignal abnimmt bzw. zunimmt; und
- um, wenn das vierte Meßsignal (SV) den Sollwert erreicht hat, dem zweiten Reguliersignal (SR2) einen Wert derart zu verleihen, daß die Differenz zwischen dem dritten (SP2) und dem zweiten (SP1) Meßsignal erneut gleich dem genannten bestimmten Wert ist.
